# EUROPEAN PATENT APPLICATION

(11) **EP 1 818 755 A2**
(43) Date of publication of application: **15.08.2007**
(21) Application number: 07100027.7
(22) Date of filing: 02.01.2007
(51) Int. Cl.: G06F 1/16

(54) **Tapping operation method and mobile electrical apparatus with the tapping operation function**

(30) Priority: 06.02.2006 CN 200610003059
(71) Applicant: High Tech Computer Corp., Taoyuan City (TW)
(72) Inventor: Wu, Kuo-Chen, Taoyuan City (TW)
(74) Representative: Viering, Jentschura & Partner

(57) **Abstract**

A tapping operation method for inputting a signal into an electrical apparatus by tapping includes the following steps. First, at least one gravitational acceleration vector along the electrical apparatus is detected. Then, a signal is inputted into the electrical apparatus when a variation rate of the gravitational acceleration vector with respect to time exceeds a predetermined value. In addition, a mobile electrical apparatus with the tapping operation function, which employs this method, is also disclosed.

## Description

### BACKGROUND

### Field of Invention

The present invention relates to an electrical apparatus. More particularly, the present invention relates to a mobile electrical apparatus with a tapping operation function.

### Description of Related Art

As more features and functionalities are added to multi-configuration handheld devices, ever-increasing interaction is required between the user and the apparatus. In many devices, this means an over reliance on multiple buttons. Four or more standard application buttons are usually placed on each machine to launch specific programs. Other buttons are also pressed for a variety of reasons including to control and select the on-screen menus. Furthermore, users often have to hold the device with one hand and push buttons with the forefinger of the other hand. Overall, reducing the number of buttons on a handheld device needs to be reduced without obstructing the unit's overall functionality.

In addition, with progress in manufacturing technology, many handheld devices are smaller and smaller, and thus the space to hold buttons is decreased as well. Some manufacturers have designed small buttons and combined buttons, but it is inconvenient for users to recognize the descriptions of the combined buttons or to press the small buttons.

For the foregoing reasons, the present invention provides solutions to simplify the design of buttons..

### SUMMARY

According to one embodiment of the present invention, a tapping operation method for inputting a signal into an electrical apparatus by tapping includes the following steps:
(a) at least one gravitational acceleration vector along the electrical apparatus is detected; and
(b) the signal is inputted into the electrical apparatus when a variation rate of the gravitational acceleration vector with respect to time exceeds a predetermined value.

When users tap the electrical apparatus, the electrical apparatus will be moved accompanied with the motion of the electrical apparatus. However, gravitational acceleration always acts towards the center of the planet (earth), whether the electrical apparatus is moved or not. Accordingly, the gravitational acceleration vector along the electrical apparatus is varied when the electrical apparatus is tapped. Therefore, this embodiment determines whether the electrical apparatus is tapped or not according to the variation rate of the gravitational acceleration vector with respect to time.

In one embodiment of the present invention, the number of gravitational acceleration vectors may be three, and the gravitational acceleration vectors may be directed in three axes of the electrical apparatus.

Besides determining whether the electrical apparatus is tapped or not, one embodiment of the present invention further determines which part of the electrical apparatus is tapped, what tapping sequence is applied to the electrical apparatus or a combination thereof according to the variation rate of the gravitational acceleration vector with respect to time. Then, which type of the signal is inputted is determined according to which part of the electrical apparatus is tapped, what tapping sequence is applied to the electrical apparatus or the combination thereof. Users may tap different parts of the electrical apparatus to input different signals like pressing conventional buttons to trigger some specific events. For example, a command for launching Outlook on the electrical apparatus is inputted when the back surface of the electrical apparatus is tapped once, and another command for receiving or sending E-mail on the electrical apparatus is inputted when the back surface of the electrical apparatus is tapped twice continuously.

According to another embodiment of the present invention, a mobile electrical apparatus with a tapping operation function includes a base, an accelerometer and a manipulator. The accelerometer is coupled to the base to detect at least one gravitational acceleration vector along the mobile electrical apparatus. The manipulator is connected to the accelerometer for inputting a signal into the mobile electrical apparatus, e.g. a command for launching a specific event such as talking or taking pictures on the mobile electrical apparatus, when a variation rate of the gravitational acceleration vector with respect to time exceeds a predetermined value.

When users tap the mobile electrical apparatus, the mobile electrical apparatus will be moved accompanied with the motion of the mobile electrical apparatus. However, gravitational acceleration always acts towards the center of the planet (earth) whether the mobile electrical apparatus is moved or not. Accordingly, the gravitational acceleration vector along the mobile electrical apparatus is varied when the mobile electrical apparatus is tapped. Therefore, this embodiment determines whether the mobile electrical apparatus is tapped or not according to the variation rate of the gravitational acceleration vector with respect to time.

In one embodiment of the present invention, the base may have no buttons mounted thereon because users may tap the mobile electrical apparatus to input the signal and operating process of the mobile electrical apparatus may be simplified. Furthermore, the space on the mobile electrical apparatus can be utilized more efficiently.

The accelerometer may include a first axle sensor for sensing a first gravitational acceleration vector along a first direction, a second axle sensor for sensing a second gravitational acceleration vector along a second direction and a third axle sensor for sensing a third gravitational acceleration vector along a third direction.

The manipulator may include a first determining module. The first determining module is connected to the accelerometer to determine which part of the mobile electrical apparatus is tapped, what tapping sequence is applied to the mobile electrical apparatus or a combination thereof according to the variation rate of the gravitational acceleration vector with respect to time.

Moreover, the manipulator may include a second determining module. The second determining module is connected to the first determining module to determine which type of the signal is inputted. The method of determining the inputted signal is according to which part of the mobile electrical apparatus is tapped, what tapping sequence is applied to the mobile electrical apparatus or the combination thereof. Users may tap different parts of the mobile electrical apparatus to input different signals like pressing conventional buttons to trigger some specific events. For example, a command for taking a picture on the mobile electrical apparatus is inputted when the side surface of the mobile electrical apparatus is tapped once, and another command for recording on the mobile electrical apparatus is inputted when the side surface of the mobile electrical apparatus is tapped twice continuously.

It is to be understood that both the foregoing general description and the following detailed description are by examples, and are intended to provide further explanation of the invention as claimed.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention. In the drawings,
Fig. 1 is a flow chart of a tapping operation method for an electrical apparatus according to one embodiment of this invention;
Fig. 2 is a drawing showing a location relationship between an electrical apparatus according to one embodiment of this invention and gravitational acceleration;
Fig. 3 is a graph showing a variation rate of the gravitational acceleration vector with respect to time according to one embodiment of this invention; and
Fig. 4 is a block diagram of a mobile electrical apparatus with a tapping operation function according to one embodiment of this invention.

### DESCRIPTION OF THE PREFERRED EMBODIMENTS

Reference will now be made in detail to the present preferred embodiments of the invention, examples of which are illustrated in the accompanying drawings. Wherever possible, the same reference numbers are used in the drawings and the description to refer to the same or like parts.

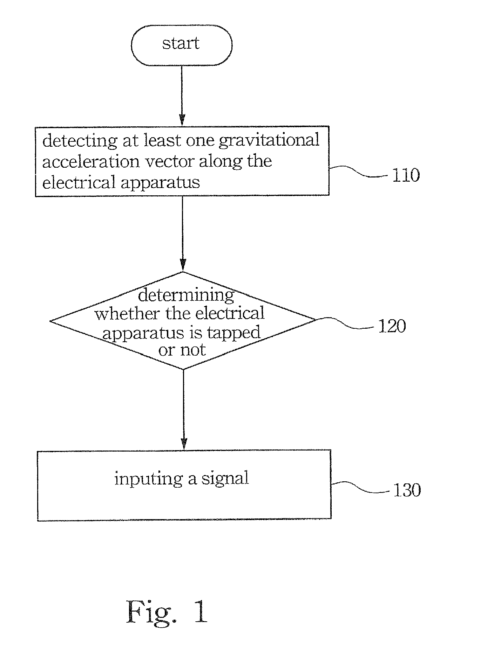

Refer to Fig. 1. Fig. 1 is a flow chart of a tapping operation method for an electrical apparatus according to one embodiment of this invention. As shown in Fig. 1, the tapping operation method includes the following steps:
(a) At least one gravitational acceleration vector along the electrical apparatus is detected (step 110).
(b) Whether the electrical apparatus is tapped is determined according to whether the variation rate of the gravitational acceleration vector with respect to time exceeds a predetermined value (step 120). Particularly, the electrical apparatus is determined to be tapped when the variation rate of the gravitational acceleration vector with respect to time exceeds the predetermined value.
(c) A signal is inputted into the electrical apparatus after the electrical apparatus is determined to be tapped (step 130). That is, the signal is inputted into the electrical apparatus when the variation rate of the gravitational acceleration vector with respect to time exceeds the predetermined value.

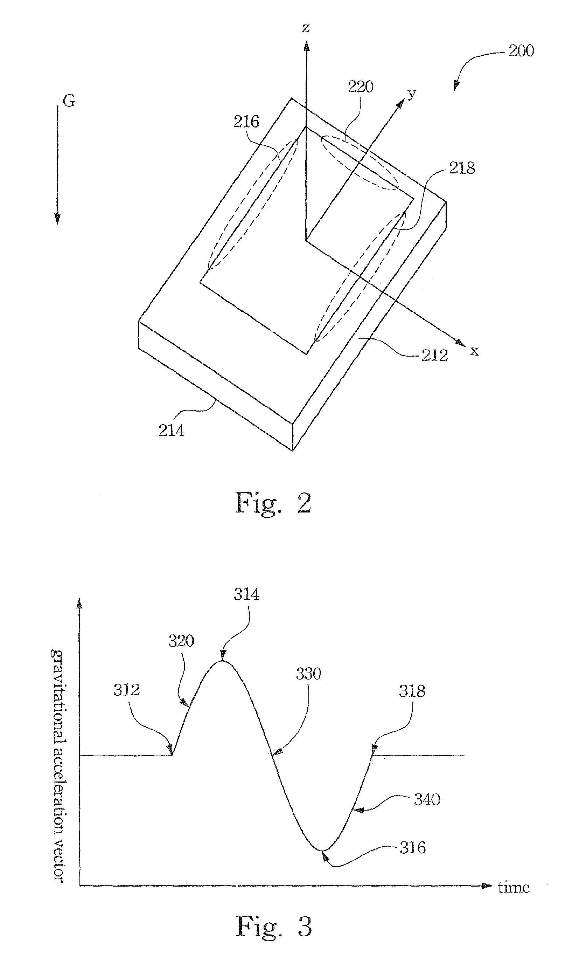

Fig. 2 shows a location relationship between the electrical apparatus 200 and gravitational acceleration G. When users tap the electrical apparatus 200, axes of the electrical apparatus 200 will be moved accompanied with the motion of the electrical apparatus 200. However, the gravitational acceleration G always acts towards the center of the planet (earth), whether the electrical apparatus 200 is moved or not. Accordingly, the gravitational acceleration vector along the electrical apparatus 200 is varied when the electrical apparatus 200 is tapped. Therefore, this embodiment determines whether the electrical apparatus 200 is tapped according to the variation rate of the gravitational acceleration vector with respect to time. For example, the electrical apparatus 200 is determined to be tapped when the variation rate of the gravitational acceleration vector along the x-axis, y-axis and z-axis of the electrical apparatus 200 with respect to time exceeds the predetermined value.

Particularly, when a user holds the electrical apparatus and taps the electrical apparatus with their hand or a tool, e.g. a stylus or a pen, the electrical apparatus is initially forced to accelerate. Then, the electrical apparatus gets a rebound acceleration because the user's holding forces the electrical apparatus into a static position. The electrical apparatus has the same moving direction as the direction of initial imposed-force because the imposed acceleration induced by the imposed-force is greater than the rebound acceleration. As the position of the electrical apparatus changes continuously (away from the static position), the rebound acceleration is increased gradually more, and the velocity of the electrical apparatus is decreased as well. After the velocity of the electrical apparatus is decreased to zero, the direction of the velocity of the electrical apparatus is reversed to the same as the direction of rebound acceleration because the rebound acceleration is larger than the imposed acceleration at this time. As the electrical apparatus approaching the static position, the rebound acceleration is decreased while the velocity of the electrical apparatus is continuously increased. The rebound acceleration is decreased to zero when the electrical apparatus is situated at the static position. However, the electrical apparatus is not static at the static position, and hence the electrical apparatus passes the static position. After the electrical apparatus passes the static position, the direction of the rebound acceleration is reversed to force the electrical apparatus back to the static position. Similarly, the velocity of the electrical apparatus is decreased due to the rebound acceleration. After the velocity of the electrical apparatus is decreased to zero, the electrical apparatus returns to the static position due to the rebound acceleration. Although there may be some small vibrations on the electrical apparatus afterwards, the vibrations are smaller and smaller, and finally the electrical apparatus still reverts to the static position.

Similarly, when the electrical apparatus is positioned on a desk or a platform, and users tap the electrical apparatus with their hand or a tool, e.g. a stylus or a pen, the imposed acceleration and the rebound acceleration are generated as well due to an initial imposed-force and a reacting force by the desk. Therefore, the electrical apparatus has the same motion as mentioned above. Particularly, the electrical apparatus may have different vibration amplitude in those two situations because the material of the desk and the material of the hand are different.

Refer to Fig. 3. Fig. 3 shows a variation rate of the gravitational acceleration vector with respect to time according to one embodiment of this invention. When the electrical apparatus is tapped, the electrical apparatus is moved as mentioned above, and axes of the electrical apparatus, e.g. the x-axis, y-axis and z-axis of the electrical apparatus 200, shown in Fig. 2, are moved accompanied with the motion of the electrical apparatus as well. Therefore, at least one gravitational acceleration vector along the electrical apparatus would be varied as the motion of the electrical apparatus. As shown in Fig. 3, a first turning point 312 means the time that the electrical apparatus is tapped, and the gravitational acceleration vector starts to be varied at this time. A second turning point 314 means the time that the velocity of the electrical apparatus is decreased to zero at the first time, and the direction of the velocity of the electrical apparatus will be reversed to the direction of the rebound acceleration because the rebound acceleration will be larger than the forced acceleration after the second turning point 314. A third turning point 316 means the time that the velocity of the electrical apparatus is decreased to zero for the second time, and the electrical apparatus will return to the static position due to the rebound acceleration after the third turning point 316. A fourth turning point 318 means the time that the electrical apparatus is located at the static position. Particularly, although not shown in Fig. 3, there may be some small vibrations on the electrical apparatus after the fourth turning point 318.

Step 120 shown in Fig. 1 determines whether the electrical apparatus is tapped according to an absolute slope between the two adjacent turning points. In one embodiment of the present invention, the electrical apparatus is determined to be tapped when the absolute slope between the second turning point 314 and the third turning point 316 exceeds the predetermined value, 350 mg/ms. If the predetermined value is less than 350 mg/ms, there will be some interference from perturbation motions or noises. In one embodiment of the present invention, the vectors of the gravitational acceleration are along three orthogonal axes of the electrical apparatus, e.g. the axes of the electrical apparatus may be along the x-axis, y-axis and z-axis of the electrical apparatus 200, shown in Fig. 2.

Specifically, the x-axis, y-axis and z-axis of the electrical apparatus 200, shown in Fig. 2, are the width direction, the length direction, and the height (or thickness) direction of the electrical apparatus 200 respectively. Because the length direction, the width direction and the height (or thickness) direction of the electrical apparatus 200 are mutually orthogonal, the gravitational acceleration vectors are independent, and thus interference can be eliminated.

Besides determining whether the electrical apparatus 200 is tapped or not, one embodiment of the present invention further determines which part of the electrical apparatus 200 is tapped, what tapping sequence is applied to the electrical apparatus 200, or a combination thereof according to the variation rate of the gravitational acceleration vector with respect to time. Then, which type of the signal is inputted is determined according to which part of the electrical apparatus 200 is tapped, what tapping sequence is applied to the electrical apparatus 200 or the combination thereof. Users may tap different parts of the electrical apparatus 200 to input different signals as pressing conventional buttons to trigger some specific events. For example, a command for launching Outlook on the electrical apparatus is inputted when the back surface of the electrical apparatus is tapped once, and another command for receiving or sending E-mail on the electrical apparatus is inputted when the back surface of the electrical apparatus is tapped twice continuously.

More specifically, the signal may be a command for launching an application program, e.g. Office, Outlook or Msn Messenger. The application program may be compatible with a windows operating system, e.g. Windows XP or Windows Mobile.

The following descriptions will illustrate how to determine which part of the electrical apparatus is tapped, what tapping sequence is applied to the electrical apparatus or the combination thereof by non-limiting examples. Please refer to Fig. 2 and Fig. 3. The curve between the first turning point 312 and the second turning point 314 is defined as a first curve 320, the curve between the second turning point 314 and the third turning point 316 is defined as a second curve 330, and the curve between the third turning point 316 and the forth turning point 318 is defined as a third curve 340.

if the gravitational acceleration vectors along the x-axis, y-axis and z-axis of the electrical apparatus 200 satisfy Condition 1 or Condition 2, the side surface 212 of the electrical apparatus 200 is determined to be tapped.

### Condition 1:

(L1) the absolute slope of the second curve 330 along the z-axis of the electrical apparatus 200 is less than 150 mg/ms;
(L2) the absolute slope of the first curve 320 along the x-axis of the electrical apparatus 200 is more than the absolute slope of the first curve 320 along the z-axis of the electrical apparatus 200;
(L3) the absolute slope of the first curve 320 along the x-axis of the electrical apparatus 200 is more than 150 mg/ms;
(L4) the absolute slope of the second curve 330 along the x-axis of the electrical apparatus 200 is less than 90 mg/ms; and
(L5) the slope of the third curve 340 along the x-axis of the electrical apparatus 200 is substantially equal to 0 mg/ms.

### Condition 2:

(L6) both the absolute slopes of the first curves 320 respectively along the x-axis and the z-axis of the electrical apparatus 200 are less than 300 mg/ms.

If the gravitational acceleration vectors along the x-axis, y-axis and z-axis of the electrical apparatus 200 satisfy one of Conditions 3~5, the back surface 214 of the electrical apparatus 200 is determined to be tapped.

### Condition 3:

(B1) the slope of the second curve 330 along the z-axis of the electrical apparatus 200 is less than -1500 mg/ms.

### Condition 4:

(B2) the slope of the second curve 330 along the z-axis of the electrical apparatus 200 is about -1500~ -1000 mg/ms;
(B3) both the absolute slope of the first curve 320 along the x-axis of the electrical apparatus 200 and the slope of the first curve 320 along the y-axis of the electrical apparatus 200 are more than 100 mg/ms; and
(B4) both the slopes of the third curves 340 respectively along the x-axis and the y-axis of the electrical apparatus 200 are more than 30 mg/ms.

### Condition 5:

(B6) the slopes of the first curves 320 respectively along the y-axis and the z-axis of the electrical apparatus 200 and the absolute slope of the first curve 320 along the x-axis of the electrical apparatus 200 are all more than 100 mg/ms; and
(B7) both the slopes of the third curves 340 respectively along the x-axis and the y-axis of the electrical apparatus 200 are less than 100 mg/ms.

If the gravitational acceleration vectors along the x-axis of the electrical apparatus 200, the y-axis of the electrical apparatus 200 and the z-axis of the electrical apparatus 200 satisfy Condition 6, the left-front surface 216 of the electrical apparatus 200 is determined to be tapped.

### Condition 6:

(FL1) the slope of the second curve 330 along the z-axis of the electrical apparatus 200 is more than 1200 mg/ms;
(FL2) the slope of the first curve 320 along the x-axis of the electrical apparatus 200 is more than 0 mg/ms; and
(FL3) the slope of the first curve 320 along the y-axis of the electrical apparatus 200 is less than 0 mg/ms.

If the gravitational acceleration vectors along the x-axis, y-axis and z-axis of the electrical apparatus 200 satisfy Condition 7, the right-front surface 218 of the electrical apparatus 200 is determined to be tapped.

### Condition 7:

(FR1) the slope of the second curve 330 along the z-axis of the electrical apparatus 200 is more than 1200 mg/ms;
(FR2) the slope of the first curve 320 along the x-axis of the electrical apparatus 200 is less than 0 mg/ms;
(FR3) the slope of the first curve 320 along the y-axis of the electrical apparatus 200 is less than 0 mg/ms; and
(FR4) the absolute slope of the first curve 320 along the x-axis of the electrical apparatus 200 is more than the absolute slope of the first curve 320 along the y-axis of the electrical apparatus 200.

If the gravitational acceleration vectors along the x-axis, y-axis and z-axis of the electrical apparatus 200 satisfy Condition 8, the top-front surface 220 of the electrical apparatus 200 is determined to be tapped.

### Condition 8:

(FU1) the slope of the second curve 330 along the z-axis of the electrical apparatus 200 is more than 1000 mg/ms;
(FU2) the slope of the first curve 320 along the x-axis of the electrical apparatus 200 is less than 0 mg/ms;
(FU3) the slope of the first curve 320 along the y-axis of the electrical apparatus 200 is less than 0 mg/ms; and
(FU4) the absolute slope of the first curve 320 along the x-axis of the electrical apparatus 200 is less than the absolute slope of the first curve 320 along the y-axis of the electrical apparatus 200.

In one embodiment, the electrical apparatus may be a mobile electrical apparatus, e.g. a mobile phone, a global positioning system or a personal digital assistant. Moreover, the step of detecting the gravitational acceleration vector may be performed by an accelerometer.

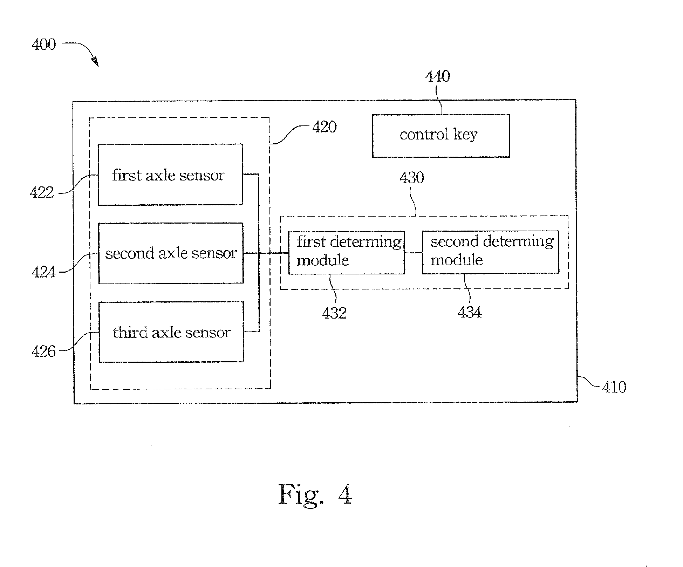

Refer to Fig. 4. Fig. 4 is a block diagram of a mobile electrical apparatus with a tapping operation function according to one embodiment of this invention. As shown in Fig. 4, the mobile electrical apparatus 400 includes a base 410, an accelerometer 420 and a manipulator 430. The accelerometer 420 is coupled to the base 410 to detect at least one gravitational acceleration vector along the mobile electrical apparatus 400. The manipulator 430 is connected to the accelerometer 420 for inputting a signal into the mobile electrical apparatus 400, e.g. a command for launching a specific event such as talking or taking pictures on the mobile electrical apparatus 400, when a variation rate of the gravitational acceleration vector with respect to time exceeds a predetermined value.

When users tap the mobile electrical apparatus 400, the mobile electrical apparatus 400 will be moved accompanied with the motion of the mobile electrical apparatus. However, gravitational acceleration always acts towards the center of the planet (earth), whether the mobile electrical apparatus 400 is moved or not. Accordingly, the gravitational acceleration vector along the mobile electrical apparatus 400 is varied when the mobile electrical apparatus 400 is tapped. Therefore, the manipulator 430 in one embodiment of the present invention determines whether the mobile electrical apparatus 400 is tapped or not according to the variation rate of the gravitational acceleration vector with respect to time.

In one embodiment of the present invention, the base 410 may have no buttons mounted thereon because users may tap the mobile electrical apparatus 400 to input the signal to make the mobile electrical apparatus 400 simple to be operated. Furthermore, the space on the mobile electrical apparatus 400 can be utilized more efficiently.

The accelerometer 420 may include a first axle sensor 422 for sensing a first gravitational acceleration vector along a first direction, a second axle sensor 424 for sensing a second gravitational acceleration vector along a second direction and a third axle sensor 426 for sensing a third gravitational acceleration vector along a third direction. In addition, the first direction, the second direction and the third direction may be mutually orthogonal. Therefore, the gravitational acceleration vectors are independent, and hence interference can be eliminated.

More specifically, the first direction, the second direction and the third direction may be a length direction, a width direction and a height (or thickness) direction of the mobile electrical apparatus 400 respectively. Because the length direction, the width direction and the height (or thickness) direction of the mobile electrical apparatus 400 are mutually perpendicular, the gravitational acceleration vectors are independent, and thus interference can be eliminated.

The manipulator 430 may include a first determining module 432. The first determining module 432 is connected to the accelerometer 420 to determine which part of the mobile electrical apparatus 400 is tapped, what tapping sequence is applied to the mobile electrical apparatus 400 or a combination thereof according to the variation rate of the gravitational acceleration vector with respect to time.

Moreover, the manipulator 430 may include a second determining module 434. The second determining module 434 is connected to the first determining module 432 to determine which type of the signal is inputted. The method of determining the inputted signal is according to which part of the mobile electrical apparatus 400 is tapped, what tapping sequence is applied to the mobile electrical apparatus 400 or the combination thereof. Users may tap different parts of the mobile electrical apparatus 400 to input different signals as pressing conventional buttons to trigger some specific events. For example, a command for taking picture on the mobile electrical apparatus 400 is inputted when the side surface of the mobile electrical apparatus 400 is tapped once, and another command for recording on the mobile electrical apparatus 400 is inputted when the side surface of the mobile electrical apparatus 400 is tapped twice continuously.

Furthermore, the manipulator 430, the first determining module 432 and the second determining module 434 may be software applications or hardware circuits in one embodiment of the invention. In addition, the manipulator 430, the first determining module 432 and the second determining module 434 may also be other suitable devices as required, and the manipulator 430, the first determining module 432 and the second determining module 434 need not all be software applications or all be hardware circuits.

More specifically, the signal may be a command for launching an application program, e.g. Office, Outlook or Msn Messenger. The application program may be compatible with a windows operating system, e.g. Windows XP or Windows Mobile.

In one embodiment, the mobile electrical apparatus may be a mobile phone, a global positioning system or a personal digital assistant. Moreover, the mobile electrical apparatus 400, shown in Fig. 4, may further include a control button 440 for turning on or turning off the tapping operation function.

The tapped part of the mobile electrical apparatus may be the top-front surface, the right-front surface, the left-front surface, the side surface or the back surface of the mobile electrical apparatus. In addition, the accelerometer may be configured in the base to save more space of the mobile electrical apparatus.

It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims and their equivalents.

## Claims

1. A mobile electrical apparatus with a tapping operation function, comprising:
a base;
an accelerometer coupled to the base for detecting at least one gravitational acceleration vector along the mobile electrical apparatus; and
a manipulator connected to the accelerometer for inputting a signal into the mobile electrical apparatus when a variation rate of the gravitational acceleration vector with respect to time exceeds a predetermined value.

2. The mobile electrical apparatus of claim 1, wherein the accelerometer comprises:
a first axle sensor for sensing a first gravitational acceleration vector along a first direction;
a second axle sensor for sensing a second gravitational acceleration vector along a second direction; and
a third axle sensor for sensing a third gravitational acceleration vector along a third direction.

3. The mobile electrical apparatus of claim 1, wherein the manipulator comprises:
a first determining module connected to the accelerometer to determine which part of the mobile electrical apparatus is tapped, what tapping sequence is applied to the mobile electrical apparatus or a combination thereof according to the variation rate of the gravitational acceleration vector with respect to time.

4. The mobile electrical apparatus of claim 3, wherein the manipulator comprises:
a second determining module connected to the first determining module to determine which type of the signal is inputted according to which part of the mobile electrical apparatus is tapped, what tapping sequence is applied to the mobile electrical apparatus or the combination thereof.

5. The mobile electrical apparatus of claim 3, wherein the tapped part of the mobile electrical apparatus is the top-front surface, the right-front surface, the left-front surface, the side surface or the back surface of the mobile electrical apparatus.

6. The mobile electrical apparatus of claim 3, wherein the signal comprises a command for launching an application program.

7. The mobile electrical apparatus of claim 3, further comprising a control button for turning on or turning off the tapping operation function.

8. A tapping operating module for an electrical apparatus, comprising:
an accelerometer coupled to the electrical apparatus for detecting at least one gravitational acceleration vector along the electrical apparatus; and
a manipulator connected to the accelerometer for inputting a signal into the electrical apparatus when a variation rate of the gravitational acceleration vector with respect to time exceeds a predetermined value.

9. The tapping operating module of claim 8, wherein the accelerometer comprises:
a first axle sensor for sensing a first gravitational acceleration vector along a first direction;
a second axle sensor for sensing a second gravitational acceleration vector along a second direction; and
a third axle sensor for sensing a third gravitational acceleration vector along a third direction.

10. The tapping operating module of claim 8, wherein the manipulator comprises:
a first determining module connected to the accelerometer to determine which part of the electrical apparatus is tapped, what tapping sequence is applied to the electrical apparatus or a combination thereof according to the variation rate of the gravitational acceleration vector with respect to time.

11. The tapping operating module of claim 10, wherein the manipulator comprises:
a second determining module connected to the first determining module to determine which type of the signal is inputted according to which part of the electrical apparatus is tapped, what tapping sequence is applied to the electrical apparatus or the combination thereof.

12. The tapping operating module of claim 8, wherein the signal comprises a command for launching an application program.
